(19) Europäisches Patentamt
European Patent Office
Office européen des brevets

(11) **EP 4 451 696 B1**

(12) **EUROPEAN PATENT SPECIFICATION**

(45) Date of publication and mention
of the grant of the patent:
**22.07.2026 Bulletin 2026/30**

(21) Application number: **22906180.9**

(22) Date of filing: **18.11.2022**

(51) International Patent Classification (IPC):
*H04N 23/957* (2023.01)    *G02B 21/14* (2006.01)
*G02B 21/36* (2006.01)    *H04N 23/55* (2023.01)
*G01J 9/02* (2006.01)

(52) Cooperative Patent Classification (CPC):
**H04N 23/957; G01J 9/02; G02B 21/14;
G02B 21/367; H04N 23/55**

(86) International application number:
**PCT/CN2022/132841**

(87) International publication number:
**WO 2023/109428 (22.06.2023 Gazette 2023/25)**

(54) **FULL-LIGHT-FIELD IMAGING CAMERA AND IMAGING METHOD THEREOF, AND
FULL-LIGHT-FIELD IMAGING DEVICE**

GANZLICHTFELD-BILDGEBUNGSKAMERA UND BILDGEBUNGSVERFAHREN DAFÜR SOWIE
GANZLICHTFELD-BILDGEBUNGSVORRICHTUNG

CAMÉRA D'IMAGERIE À CHAMP LUMINEUX COMPLET ET SON PROCÉDÉ D'IMAGERIE, ET
DISPOSITIF D'IMAGERIE À CHAMP LUMINEUX COMPLET

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.12.2021 CN 202111548124**

(43) Date of publication of application:
**23.10.2024 Bulletin 2024/43**

(73) Proprietor: **Shanghai Advanced Research
Institute,
Chinese Academy of Sciences
Pudong, Shanghai 201210 (CN)**

(72) Inventors:
• **WANG, Zhongyang**
  **Shanghai 201210 (CN)**
• **SUN, Jing**
  **Shanghai 201210 (CN)**
• **WANG, Kewei**
  **Shanghai 201210 (CN)**

(74) Representative: **Hoefer & Partner Patentanwälte
mbB
Pilgersheimer Straße 20
81543 München (DE)**

(56) References cited:
CN-A- 104 977 810    CN-A- 109 472 842
CN-A- 111 289 479    CN-A- 111 340 902
CN-A- 112 804 513    CN-A- 114 374 779
JP-A- 2020 159 975    US-A1- 2009 290 156

• LUIS CAMACHO ET AL.: "Phase extraction
  iroscopy using tunable defocusing by means of
  a SLM", SPIE, PO BOX 10 BELLINGHAM WA
  98227-0010, USA, 26 May 2011 (2011-05-26),
  pages 808200-1 - 808200-6, XP040559306, DOI:
  doi.org/10.1117/12.889591
• CHIEN-HUNG LU ET AL: "High-resolution light-
  field imaging via phase space retrieval",
  APPLIED OPTICS, vol. 58, no. 5, 10 February
  2019 (2019-02-10), US, pages A142,
  XP055692761, ISSN: 1559-128X, DOI: 10.1364/
  AO.58.00A142

**Description**

BACKGROUND OF THE INVENTION

1. Field of the Invention

The present application relates to the field of imaging, and more specifically to a full-light-field imaging camera, an imaging method thereof, and a full-light-field imaging device.

2. Related Art

During imaging process, phase information of an object often plays a more important role relative to intensity information of the object. However, in practical optical imaging, the imaging array detector can only detect the intensity information of the image, and the corresponding phase information is lost, and thus the imaging process loses important phase information of the object. In order to recover the phase information of an image, many phase imaging methods have been developed over the years and mainly contain the following types:

The first type of method is coherent diffractive imaging (CDI), which illuminates a sample with coherent light, wherein the light passes through the sample and diffracts to a far field, then forms a spatial Fourier spectrum intensity distribution of the object in the far field. The imaging of the object is realized by collecting the spatial Fourier spectrum intensity distribution with over-sampling rates as a constraint, and by retrieving the amplitude and phase information of the object using the iterative Fourier transform operation.

The second type of method is Fourier ptychographic microscopy (FPM), which is performed by illuminating a sample from different angles, and collecting the reflected or transmitted light by a microscopic objective. Each angle of light illumination forms a different intensity distribution in image plane, and amplitude and phase information are recovered by using Fourier iterative algorithm and by using these detected overlapping intensity distributions in image plane as constraints, so as to realize imaging of the object.

The third type of method is holographic imaging. This technique introduces a reference light beam, and makes the diffracted light passing through the object and interferes with the reference light to obtain a hologram. At this case, the contrast and shape (or position) information of interference fringes contains the wavefront amplitude and phase information of the object respectively, and then the amplitude and phase information of the object can be obtained by retrieving the wavefront of the hologram, so as to realize the clear imaging of the object.

Since the phase information has been lost in the actual image acquisition process, additional information must be available as a constraint in the process of recovering the phase. Although all of the above methods are able to successfully solve for the phase and thus recover the image of the object, they have different drawbacks, which are mainly reflected in the following aspects:

1. The first type of method has a requirement for high sampling rates. It requires increasing the sampling rate due to the fact that only part of the information in the spatial Fourier spectrum plane is detected, which is not sufficient to solve for the phase information, and it is needed to increasing the sampling rate to create the amount of redundant information so as to obtain sufficient constraints. And the method makes it easy to cause the algorithm not to converge.

2. The second type of method also has a requirement for the amount of information redundancy. Only part of the real image plane information is detected, and it is not enough to uniquely recover the phase information, in order to obtain sufficient constraints, this type of method makes a certain degree of overlap detection with two adjacent angle illuminations, and therefore a large amount of information redundancy reduces the time of the imaging.

3. The third type of method needs to additionally introduce a reference beam to interfere with the diffracted light, which makes the light path relatively complex, requires high stability, and generates problems such as twin images in the process of solving for the phase by using holography, which makes the algorithm unable to converge.

CHIEN-HUNG LU ET AL: "High-resolution light-field imaging via phase space retrieval", APPLIED OPTICS, vol. 58, no. 5, 10 February 2019 (2019-02-10), page A142, XP055692761, US ISSN: 1559-128X, DOI: 10.1364/AO.58.00A142 discloses high-resolution light-field imaging via phase space retrieval. By combining a high-resolution image from a standard camera with a low-resolution light-field image from a lenslet array, a high-resolution light-field image is numerically reconstructed. The method is experimentally demonstrated by creating a high-definition 3D image of a human cheek cell with a commercially available microscope.

SUMMARY OF THE INVENTION

The purpose according to the present application is to provide a full-light-field imaging camera, an imaging method thereof, and a full-light-field imaging device, so as to solve the difficulties that in existing phase imaging technologies, the requirement for the sampling rates is high, redundant information needs to be obtained by overlapping detection, algorithm convergence is slow, etc.

Thus the technical solution of the present application is to provide a full-light-field imaging camera, comprising an imaging assembly and a first two-dimensional array detector which are sequentially arranged along the direction of a light path to form an intensity information acquisition system for image plane, an imaging assembly, a Fourier transform lens and a second two-dimensional array detector which are sequentially arranged along the direction of another light path to form an intensity information acquisition system for spatial Fourier spectrum, and an arithmetic processor in communicational connection with the first two-dimensional array detector and the second two-dimensional array detector; wherein the imaging assembly is configured to receive the scattering light from an object to form an imaging light, the imaging light gives an image on a detection surface of the first two-dimensional array detector to form a first image plane, and the imaging light gives an image at a position of a known distance in front of the Fourier transform lens to form a second image plane, and then forms a spatial Fourier spectrum plane on a detection surface of the second two-dimensional array detector where it is on a focal plane behind the Fourier transform lens, wherein the imaging light at the second image plane forms a spatial Fourier spectrum plane after being transformed by the Fourier transform lens.

Preferably, the number of the imaging assemblies is one and a beam splitter is provided between the imaging assembly and the Fourier transform lens, or the number of the imaging assemblies are two and a beam splitter is provided in front of the two imaging assemblies; and one of the first image plane and the second image plane is formed by first image of the imaging light, and the other one is formed by second image of the imaging light after reflected by the beam splitter; the first two-dimensional array detector and the second two-dimensional array detector are two two-dimensional array detectors or a same movable two-dimensional array detector.

Preferably, the first two-dimensional array detector and the second two-dimensional array detector are two different two-dimensional array detectors which respectively detect the first intensity information in image plane and the intensity information in spatial Fourier spectrum plane, or are a same two-dimensional array detector which is movable along a light path; in this case, the Fourier transform lens is movable, so that movement of the two-dimensional array detector and movement of the Fourier transform lens into and out of the light path lead to a switch between the intensity information acquisition system for image plane and the intensity information acquisition system for spatial Fourier spectrum.

According to the invention, the arithmetic processor is configured to receive the intensity information in image plane and the intensity information in spatial Fourier spectrum plane, and perform the following step S1: using the intensity information in image plane and the intensity information in spatial Fourier spectrum plane as constraints for Iterative Fourier operation, obtaining spatial distribution information of amplitude and phase of the object by using multiple Iterative Fourier operation, so as to realize full-light-field imaging, wherein the method of the Iterative Fourier operation comprises a Gerchberg-Saxton algorithm, or a Hybrid input-output algorithm or a Yang-Gu algorithm.

The imaging light is imaged on a focal plane in front of the Fourier transform lens.

On the other hand, the technical solution of the present application is to provide an imaging method of a full-light-field imaging camera, comprising:

S1': providing an imaging assembly such that illumination light irradiates an object and then passes through the imaging assembly to form an imaging light of the object, placing a detection surface of a first two-dimensional array detector on a first image plane at where the imaging light forms first image, placing a Fourier transform lens at a position at a known distance from a second image plane at where the imaging light forms second image, and placing a second two-dimensional array detector at a rear focal plane of the Fourier transform lens; lens, wherein the imaging light at the second image plane forms a spatial Fourier spectrum plane after being transformed by the Fourier transform lens; obtaining the intensity information in image plane and the intensity information in spatial Fourier spectrum plane of the object by using the first two-dimensional array detector and the second two-dimensional array detector;

S2': uploading the intensity information in image plane and the intensity information in the spatial Fourier spectrum plane of the object obtained in step S1' to an arithmetic processor, and utilizing said arithmetic processor to perform a following step S1: using the intensity information in image plane and the intensity information in the spatial Fourier spectrum plane as constraints for the Iterative Fourier operation, obtaining the spatial distribution information of amplitude and phase of the object by using multiple Iterative Fourier operation, so as to realize full-light-field imaging, wherein the method of the Iterative Fourier operation comprises a Gerchberg-Saxton algorithm, or a Hybrid input-output algorithm or a Yang-Gu algorithm.

Preferably, wherein the step S1' further comprises: the number of the imaging assemblies is one, and a beam splitter is placed between the imaging assembly and the first two-dimensional array detector, or the number of the imaging assemblies are two, and a beam splitter is placed in front of two imaging assemblies; and a first image plane is formed by the first image of the imaging light , and a second image plane is formed by the second image of the imaging light after reflected by the beam splitter.

Preferably, the illumination light is coherent light or partially coherent light of known coherence degree, the partially coherent light satisfying a quasi-monochromatic criterion.

On the other hand, the technical solution of the present application is to provide a full-light-field imaging device based on a full-light-field imaging camera, comprising: a laser device, an object and an imaging lens set on the same light axis, and a full-light-field imaging camera according to the above description; wherein the imaging lens set is an imaging objective, or an imaging objective and an imaging lens, and the object is disposed in a focal plane of the imaging objective of the imaging lens set.

On the other hand, the technical solution of the present application is to provide a full-light-field imaging device based on a full-light-field imaging camera comprises a full-light-field imaging camera according to the above description; wherein the full-light-field imaging device is a microscope, a camera, or a telescopic and remote sensing device, and an imaging assembly of the full-light-field imaging camera comprises an imaging lens assembly matched to a microscopic objective lens, a camera lens assembly matched to the camera, or a telescopic and remote sensing imaging assembly matched to the telescopic and remote sensing device.

The method and device for realizing a full-light-field imaging camera provided by the present application utilize the image plane intensity information, the spatial Fourier spectrum intensity information and a lens transformation as constraints, and obtains the amplitude and phase of the imaging object through Iterative Fourier operation to realize full-light-field imaging. It has the following advantages over the existing phase imaging and the device thereof:

Existing phase imaging methods usually require additional information as a constraint, either oversampling rate or reference light, as a constraint to solve for phase. The present application simplifies the design for the light path of the conventional method by using the information actually detected by the image and Fourier planes, and sufficient information can be obtained to solve the phase by the constraints of the dual plane information, which reduces the requirement for sampling while simplifying the experimental difficulty.

Existing methods usually fail to converge, or fail to converge to an optimal solution due to insufficient information in the constraints. The information used as constraints in the present method is physically detected, and thus the information is more accurate, which allows the Iterative Fourier operation to converge faster and more accurately.

Therefore, the method and device for realizing the full-light-field imaging camera of the present application have the advantages of being able to effectively reduce the sampling requirements for the detector, simplifying the image configuration, and improving the amount of imaging information.

BRIEF DESCRIPTION OF THE DRAWINGS

Fig. 1 shows a schematic diagram of a structure of a full-light-field imaging camera according to a first embodiment of the present application.
Fig. 2 is a schematic diagram of a structure of a full-light-field imaging device based on a full-light-field imaging camera according to a third embodiment of the present application, wherein the full-light-field imaging device is used for realizing full-light-field imaging of a ground glass.
Fig. 3 shows a schematic structural diagram of a full-light-field imaging device based on a full-light-field imaging camera according to a fourth embodiment of the present application, wherein the full-light-field imaging device is applied in the field of microscopic imaging.

DESCRIPTION OF THE ENABLING EMBODIMENT

Embodiments of the present application are hereinafter described by way of particular specific examples, and other advantages and efficiencies of the present application can be readily appreciated by the skilled person in the art from the contents disclosed in this specification. The present application may also be implemented or applied by other different specific embodiments, and various details in this specification may also be modified or altered in various ways based on different viewpoints and applications. It should be noted that the following embodiments and features in the embodiments may be combined with each other without conflict.

It should be noted that the illustrations provided in the following embodiments only illustrate the basic concept of the present application in a schematic manner, and only the components related to the present application are shown in the illustrations. Thus, the components are not drawn in accordance with the number, shapes, and sizes of the components in actual implementation, and the actual implementation of the components in terms of the type, number, and proportion of the components may be changed arbitrarily, and the layout of the components may also be more complicated.

First embodiment: a full-light-field imaging camera

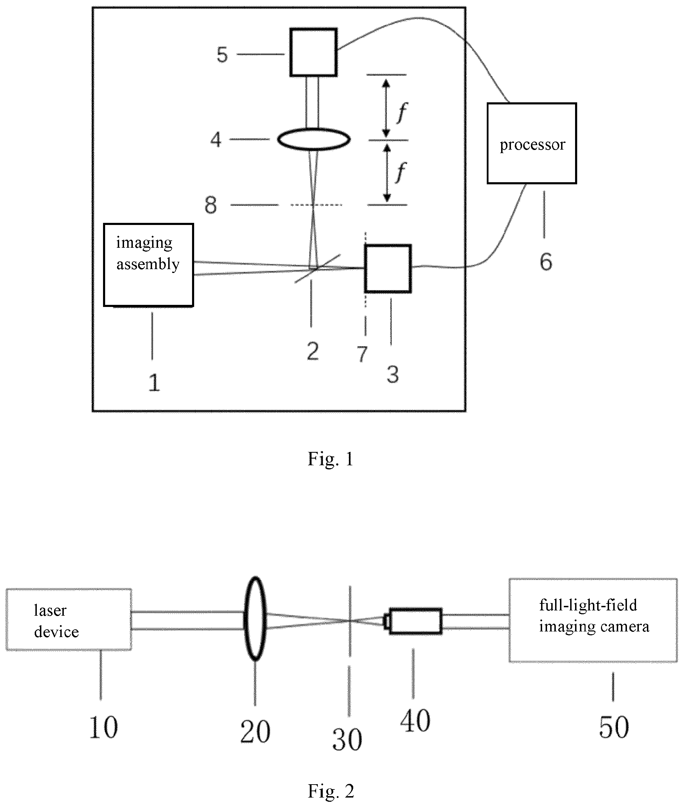

Fig. 1 is a schematic diagram of a structure of a full-light-field imaging camera according to an embodiment of the present application.

As shown in Fig. 1, in the present embodiment, the full-light-field imaging camera comprises: an imaging assembly 1, a beam splitter 2, and a first two-dimensional array detector 3 arranged sequentially on a first light axis along a light path direction, the beam splitter 2, a Fourier transform lens 4 with a focal length of f, and a second two-dimensional array detector 5 arranged sequentially on a second light axis relative to the first light axis along another light path direction, and an arithmetic processor 6 in communicational connection with both the first two-dimensional array detector 3 and the second two-dimensional array detector 5.

The imaging assembly 1 is located downstream of the object and is configured to receive scattering light from the object in order to provide imaging light of the object to be detected, and said imaging light is imaged on the detection surface of the first two-dimensional array detector 3 in order to form a first image plane 7 by first image, so that light intensity distribution on the detection surface of the first two-dimensional array detector 3 corresponds to the intensity distribution in image plane. Thus, the imaging assembly 1 and the first two-dimensional array detector 3 arranged sequentially in light path direction constitute an intensity information acquisition system for image plane, and the first two-dimensional array detector 3 acquires the intensity information in image plane.

Wherein, the illumination light may adopt coherent light or partially coherent light of known coherence degree, the coherence degree of the partially coherent light satisfying a quasi-monochromatic criterion, i.e., $\lambda/\Delta\lambda > M$ ($\lambda$ is the wavelength of the partially coherent light, $\Delta\lambda$ is the wavelength width of the partially coherent light, and M is the number of pixels of the first two-dimensional array detector 3 in one direction and that of the second two-dimensional array detector 5).

The imaging light is reflected by said beam splitter 2 and then imaged on a focal plane in front of the Fourier transform lens 4 to form a second image plane 8 by imaging (that is, the distance between the second image plane 8 and the Fourier transform lens 4 is the focal length f of the Fourier transform lens 4), and the distance between the Fourier transform lens 4 and the second two-dimensional array detector 5 is the focal length f of the Fourier transform lens 4, such that light intensity distribution on the detection surface of the second two-dimensional array detector 5 corresponds to the intensity distribution information in spatial Fourier spectrum plane. In other embodiments, there may also be cases where the distance between the second image plane 8 and the Fourier transform lens 4 is not the focal length f of the Fourier transform lens 4 but the distance between the second image plane 8 and the Fourier transform lens 4 is known. Therefore, the imaging assembly 1, the beam splitter 2, the Fourier transform lens 4 and the second two-dimensional array detector 5 arranged in sequence along the light path direction constitute an intensity information acquisition system for spatial Fourier spectrum, and the second two-dimensional array detector 5 acquires the intensity information in spatial Fourier spectrum plane.

The first two-dimensional array detector 3 and the second two-dimensional array detector 5 have light-sensitive elements, and are configured to convert light intensity (that is, the square information of the amplitude of a light wave) on their detection surfaces into an electrical signal by means of the photoelectric conversion property of the light-sensitive elements. The light intensities on the detection surfaces comprise the intensity information in image plane and intensity information in spatial Fourier spectrum plane (embodied as an image with the gray value). The electrical signal formed by the conversion is itself dimensionless, and the unit of the light intensity on the detection surface itself is W/cm$^2$, and thus the units of the image plane intensity information and the spatial Fourier spectrum intensity information are W/cm$^2$. Specifically, the image plane intensity information obtained by detection is represented as $f(x_0, y_0)$, and the spatial Fourier spectrum intensity information is represented as $F(u_0, v_0)$, wherein $x_0$, $y_0$ means coordinates of the detection surface of the first two-dimensional array detector 3, that is, the coordinates of the real image space, $u_0$, $v_0$ means the coordinates of the detection surface of the second two-dimensional array detector 5, that is the coordinates of the spatial Fourier frequency domain, and the function values of $f(x_0, y_0)$ and $F(u_0, v_0)$ are the values of the light intensities (that is the squares of the light amplitudes) detected by the first two-dimensional array detector 3 and the second two-dimensional array detector 5, respectively.

The first two-dimensional array detector 3 and the second two-dimensional array detector 5 described herein may adopt high sampling rate CCDs, EMCCDs, CMOSs, or sCMOSs.

In the present embodiment, the first image plane 7 is formed by first image of imaging light, and the second image plane 8 is formed by the second image of the imaging light after reflected by the beam splitter 2. The first two-dimensional array detector 3 and the second two-dimensional array detector 5 use two different two-dimensional array detectors in order to detect the intensity information in image plane and the intensity information in spatial Fourier spectrum plane, simultaneously.

In other embodiments, one of the first image plane 7 and the second image plane 8 is formed by first image of the imaging light, and the other is formed by the second image of the imaging light after reflected by the beam splitter 2. The first image plane 7 and the second image plane 8 are image planes that represent the same information but are located at different positions. The imaging light at the second image plane 8 is transformed by the Fourier transform lens 4 to form a spatial Fourier spectrum plane. The first two-dimensional array detector 3 and the second two-dimensional array detector 5 may be the same two-dimensional array detector movable to different light paths, that is, the same two-dimensional array detector is successively used as the first two-dimensional array detector 3 and the second two-dimensional array detector 5 by movement of the position of the same two-dimensional array detector, so that by using the same two-dimensional array detector, the image plane intensity information is obtain when it is used as the first two-dimensional array detector 3, and the spatial Fourier spectrum intensity information is obtained when it is used as the second two-dimensional array detector 5.

In another embodiment, the beam splitter 2 may be provided in front of the imaging assembly 1, that is, the number of the beam splitters 2 is one and the number of the imaging assemblies 1 is two. The scattering light from the object passes through the beam splitter and is divided into two ways of scattering light, and then the first imaging assembly receives one way of the scattering light and provides the corresponding imaging light, wherein the imaging light is imaged at the detection surface of a first two-dimensional array detector to form a first image plane. Then, the second imaging assembly receives the other way of scattering light and provides corresponding imaging light, wherein the imaging light is imaged at a known distance in front of the Fourier transform lens to form a second image plane, and then forms a spatial Fourier spectrum plane on the detection surface of the second two-dimensional array detector on the rear focal plane of the Fourier transform lens. At this point, it is also satisfied that the first image plane is formed by first image of the imaging light , the second image plane is formed by the second image of the imaging light after reflected by the beam splitter, the first image plane and the second image plane are image planes that represent the same information but are located at different positions, and the imaging light at the second image plane is transformed by the Fourier transform lens 4 to form the spatial Fourier spectrum plane.

In another embodiment, the beam splitter 2 may be omitted, that is, the first image plane and the second image plane are both formed by the image of the imaging light of the object, and are the same image plane located at the same position; and the first two-dimensional array detector and the second two-dimensional array detector may be two different two-dimensional array detectors that can be moved into and out of the light path or the same two-dimensional array detector that can be moved along the light path. In this case where the beam splitter is omitted, the Fourier transform lens is movable (that is, can be moved into and out of the light path), which leads to a switch between the intensity information acquisition system for image plane and the intensity information acquisition system for spatial Fourier spectrum by means of the different two-dimensional array detectors moving into and out of the light path, or the same two-dimensional array detector moving back and forth along the light path and the Fourier transform lens moving into and out of the light path.

The imaging assembly 1 comprises but is not limited to an imaging lens assembly matched to a microscopic objective lens external to a full-light-field imaging camera, a camera lens assembly, and a telescopic and remote sensing imaging lens assembly, among others.

The beam splitter 2 comprises but is not limited to an optical beam splitter with a beam splitting ratio of 1 to 1, and other optical beam splitters with fixed beam splitting ratios.

The Fourier transform lens 4 may be an achromatic compound lens in the detection spectral range, or may be a concave and ellipsoidal mirror without chromatic aberration. The aperture D of the Fourier transform lens 4 does not truncate the spatial spectrum contained in the image, and its focal length f meets the sampling requirements for the image plane and the spatial Fourier spectrum intensity information surface, that is, $f = \dfrac{\Delta x_1 \Delta x_2 N}{\lambda}$ , wherein $\lambda$ is the wavelength of the scattering light, $\Delta x_1$ is the sampling spacing of the first two-dimensional array detector 3, $\Delta x_2$ is the sampling spacing of the second two-dimensional array detector 5, and N is the number of sampling points.

The arithmetic processor 6 may be a computer or a built-in iterative Fourier processor or the like.

The arithmetic processor 6 is configured to receive the image plane intensity information and the spatial Fourier spectrum intensity information and perform the following step S1:

using the image plane intensity information and the spatial Fourier spectrum intensity information as constraints for Iterative Fourier operation, obtaining spatial distribution information of amplitude and phase of the object by using multiple Iterative Fourier operation, so as to realize full-light-field imaging.

Therefore, on the basis of the existing technique of recovering the phase by using Iterative Fourier operation, the present application provides both the image plane intensity information and the spatial Fourier spectrum intensity information simultaneously by using the light path structure of the intensity information acquisition system for image plane and the intensity information acquisition system for spatial Fourier spectrum, so as to realize the full-light-field camera.

Wherein, the obtained imaging result of the full-light-field imaging is the spatial distribution information of amplitude and phase of the object obtained by the Iterative Fourier operation. The imaging result may be represented as a wave function or as a recovered image with the gray value, and the spatial distribution of amplitude and phase are reflected in the recovered image as the gray value of each pixel grid on the image.

Wherein, the method of Iterative Fourier operation may specifically comprise but is not limited to the following Iterative Fourier phase recovery algorithms: 1, Gerchberg-Saxton (GS) algorithm; 2, Hybrid input-output (HIO) algorithm; 3, Yang-Gu (Y-G) algorithm. Refer specifically to the document [Gerchberg R W, O. A S W. A practical algorithm for the determination of phase from image and diffraction plane pictures[J]. Optik, 1972, 35:237-250], [Fienup J R . Reconstruction of an object from modulus of its Fourier transform[J]. Optics Letters, 1978, 3(1):27-29], and [YANG GUO-ZHEN, GU BEN-YUAN, on the amplitude-phase retrieval problem in optical systems, Acta Phys. Sin., 1981, 30(3): 410-413].

Accordingly, the types of constraints for Iterative Fourier operation comprise but are not limited to intensity constraints, non-negative constraints, spatially bounded constraints, and so on.

The specific steps of step S1 are described below by taking the Gerchberg-Saxton (GS) algorithm and intensity constraints as an example.

The described step S1 specifically comprises: performing the following iterative operation steps based on the detected image plane intensity information $f(x_0, y_0)$ and the spatial Fourier spectrum intensity information $F(u_0, v_0)$:

Step S11: initializing a current iteration round number k to 0, and randomly assigning an image plane phase value $\varphi^{(0)}$ in the iteration round number of 0 to the detected image plane intensity distribution $f(x_0, y_0)$, so as to obtain the complex form $f(x_0, y_0)e^{i\varphi^{(0)}}$ of the image plane intensity distribution in the current iteration round number;

Step S12: performing a Fourier transform on the complex form $f(x_0, y_0)e^{i\varphi^{(k)}}$ of the image plane intensity distribution in the current iteration round number to obtain a spatial Fourier spectrum transformation result $F^{(k)}(u_0, v_0)e^{i\phi^{(k)}}$ in the current iteration round number, wherein $\phi^{(k)}$ is a spectral conversion result of the image plane phase value in the current iteration round number;

Step S13: replacing the bottom portion of the spatial Fourier spectrum transformation result $F^{(k)}(u_0, v_0)e^{i\phi^{(k)}}$ with the detected spatial Fourier spectrum intensity information $F(u_0, v_0)$ to obtain the complex form $F(u_0, v_0)e^{i\phi^{(k)}}$ of the spatial Fourier spectrum distribution in the current iteration round number.

Step S14: performing a Fourier inverse transformation on the complex form $F(u_0, v_0)e^{i\phi^{(k)}}$ of the spatial Fourier spectrum distribution in the current iteration round to obtain the image intensity distribution conversion result $f^{(k)}(x_0, y_0)e^{i\varphi^{(k)}}$ in the next order of the current iteration round.

Step S15: replacing the bottom portion of the image intensity distribution conversion result $f^{(k)}(x_0, y_0)e^{i\varphi^{(k)}}$ in the next order of the current iteration round with the detected image intensity information $f(x_0, y_0)$ to obtain the complex form $f(x_0, y_0)e^{i\varphi^{(k+1)}}$ of the image plane intensity distribution in the next order of the current iteration round number.

Step S16: taking the next order k+1 of the current iteration round as the new current iteration round k, and repeating the above step S12 to step S15 until the algorithm converges; and at this time, the complex form $f(x_0, y_0)e^{i\varphi^{(k+1)}}$ of the image plane intensity distribution in the next order of the current iteration round number is the same as the complex form $F(u_0, v_0)e^{i\phi^{(k)}}$ of the spatial Fourier spectrum distribution in the current iteration round, and both of them comprise the complex amplitude $f(x_0, v_0)e^{i\varphi}$ of the real image plane and the complex amplitude $F(u_0, v_0)e^{i\phi}$ of the spatial Fourier spectrum intensity information plane finally recovered.

Wherein, the algorithm is considered to converge if, after the k-th iteration round, the complex form distributions of the spatial Fourier spectrum in the current iteration round k and its previous order satisfy the formula: $|F^{(k)}(u_0, v_0)| = |F^{(k-1)}(u_0, v_0)|$.

Step S17: determining the spatial distribution information of amplitude and phase of the object based on the complex amplitude $f(x_0, y_0)v_0)e^{i\varphi}$ of the real image plane and the complex amplitude $F(u_0, v_0)e^{i\phi}$ of the spatial Fourier spectrum intensity information plane finally recovered.

Thus, in the present embodiment, the present application utilizes the intensity of the detected spatial Fourier spectrum surface as a constraint at step S13; and utilizes the detected intensity of the real image plane as an intensity constraint at step S15, and utilizes the intensity information of the two surfaces as an intensity constraint, so as to make the arithmetic result approach to the constraint, thus making the result satisfy the intensity constraints of the real image plane and the spatial Fourier plane at the same time, so that it can be ensured that the lost phase information is successfully computed.

The above step S11-step S16 provided by the present application are based on the following principle:

In said step S1, the two-dimensional array detector obtains the spatial Fourier spectrum intensity information on the spatial Fourier spectrum intensity information plane of the object according to the sampling theorem. It can be obtained according to the sampling theorem that:

$$|F(u, v)|\exp(i\phi) = \sum_{N=1}^{n} \sum_{M=1}^{m} \left| F\left(\frac{n}{L_x}, \frac{m}{L_y}\right) \right| \exp(i\phi)\, sinc(L_x u - n)$$

$$sinc(L_y v - m)$$

7

wherein, u, v represent the coordinates of the spatial Fourier spectrum intensity information surface; $\Phi$ represents the phase information of the light wave of the spatial Fourier spectrum intensity information surface; $L_x$, $L_y$ represent the dimensions of the real image plane region extending in the x, y directions; n, m represent the positions of various pixel grids of the sampling, and the sinc function is the Fourier transform of the rectangular function.

In said step S2, the two-dimensional array detector obtains the image plane intensity information of the object according to the sampling theorem. It can be obtained according to the sampling theorem that:

$$|f(x,y)|exp\,(i\varphi) = \sum_{N=1}^{n} \sum_{M=1}^{m} |f\left(\frac{n}{2B_x}, \frac{m}{2B_y}\right)|exp\,(i\varphi)sinc(2B_x x - n)$$

$$sinc(2B_y y - m)$$

wherein x, y represent the coordinates of the real image plane; $\varphi$ represents the phase information of the light wave of the real image plane; Bx, By represent the highest frequencies of the object extending in the x, y directions; n, m represent the positions of various pixel grids of the sampling, and the sinc function is the Fourier transform of the rectangular function.

The two can be linked together by the Fourier transform. With the known n pieces of intensity information as the known constraints, the above two equations can be solved by the above step S11-step S16 to obtain the complex amplitude $f(x_0, y_0)e^{i\varphi}$ of the real image plane and the complex amplitude $F(u_0, v_0)e^{i\phi}$ of the spatial Fourier spectrum plane, that is, to obtain the unknown phase information $\varphi$, $\phi$.

Second embodiment: imaging method of a full-light-field imaging camera

Based on the full-light-field imaging camera described above, the realized imaging method of the full-light-field imaging camera specifically comprises:

Step S1': providing an imaging assembly 1 such that illumination light irradiates an object and then passes through the imaging assembly 1 to form an image of the object, placing a detection surface of a first two-dimensional array detector 3 on a first image plane 7 formed by the first image of said imaging light, placing a Fourier transform lens 4 at a position at a known distance from a second image plane 8 of said imaging light(for example, the Fourier transform lens 4 may be placed so that its front focal plane is located on the second image plane 8 formed by second image of said imaging light, that is, the distance between the Fourier transform lens 4 and the second image plane 8 is equal to the focal length of the Fourier transform lens 4), and placing a second two-dimensional array detector 5 at a rear focal plane of the Fourier transform lens 4; obtaining image plane intensity information and spatial Fourier spectrum intensity information of the object by using the first two-dimensional array detector 3 and the second two-dimensional array detector 5.

In the present embodiment, the step S1' further comprises: the number of the imaging assemblies 1 is one, and a beam splitter 2 is placed between the imaging assembly 1 and the first two-dimensional array detector 3, so that the first image plane 7 is formed by first image of the imaging light, and the second image plane 8 is formed by the second image of the imaging light after reflected by the beam splitter 2.

In another embodiment, said step S1' further comprises: the number of the imaging assemblies 1 is two, and a beam splitter 2 is placed in front of two imaging assemblies 1. Thus, the scattering light from the object passes through the beam splitter and is divided into two ways of scattering light, and then the first imaging assembly receives one way of the scattering light and provides the corresponding imaging light, wherein the imaging light is imaged at the detection surface of a first two-dimensional array detector to form a first image plane. Then, the second imaging assembly receives the other way of scattering light and provides corresponding imaging light, wherein the imaging light is imaged at a known distance in front of the Fourier transform lens to form a second image plane, and forms a spatial Fourier spectrum plane on the detection surface of the second two-dimensional array detector on the rear focal plane of the Fourier transform lens. At this point, it is also satisfied that the first image plane is formed by first image of the imaging light, the second image plane is formed by the second image of the imaging light after reflected by the beam splitter, the first image plane and the second image plane are image planes that represent the same information but are located at different positions, and the imaging light at the second image plane is transformed by the Fourier transform lens 4 to form the spatial Fourier spectrum plane.

In another embodiment, the beam splitter 2 may be omitted, that is, the first image plane and the second image plane are both formed by the image of the imaging light, and are the same image plane located at the same position; and the first two-dimensional array detector and the second two-dimensional array detector may be two different two-dimensional array detectors that can be moved into and out of the light path or the same two-dimensional array detector that can be moved along the light path. In this case where the beam splitter is omitted, the Fourier transform lens is movable (that is, can be moved into and out of the light path), which leads to a switch between the intensity information acquisition system for image plane and the intensity information acquisition system for spatial Fourier spectrum by means of the different two-dimensional array detectors moving into and out of the light path, or the same two-dimensional array detector moving back and forth along the light path and the Fourier transform lens moving into and out of the light path.

Step S2': uploading the image plane intensity information and the spatial Fourier spectrum intensity information of the object obtained in step S1' to an arithmetic processor 6, and utilizing said arithmetic processor 6 to perform step S1 as follows: using the image plane intensity information and the spatial Fourier spectrum intensity information as constraints for the Iterative Fourier operation, obtaining spatial distribution information of amplitude and phase of the object by using multiple Iterative Fourier operation, so as to realize full-light-field imaging.

The specific content of the step S1 is as described above.

Third embodiment: full-light-field imaging device based on a full-light-field imaging camera

Fig. 2 shows a full-light-field imaging device based on a full-light-field imaging camera according to a third embodiment of the present application, which is used to realize full-light-field imaging of a ground glass by using a full-light-field imaging camera. As shown in Fig. 2, the full-light-field imaging device comprises: a laser device 10, a first focusing lens 20, an object 30, a magnifying objective lens 40 and a full-light-field imaging camera 50 as described above, arranged sequentially on the same light axis, wherein the first focusing lens 20 and the magnifying objective lens 40 constitutes an imaging lens set and they are the imaging lens and the imaging objective lens of the imaging lens set, respectively. The object 30 is located on the focal plane of the magnifying objective lens 40.

As a result, the laser is emitted by the laser device 10 and then focused by using the first focusing lens 20 and illuminates on the object 30. The transmitted light is then amplified by the objective lens 4 to satisfy the detector sampling. Wherein, the imaging assembly 1 of said full-light-field imaging camera 50 is matched to the magnifying objective lens 40 to satisfy the imaging conditions of the full-light-field imaging camera 50, so as to obtain the amplitude and phase information of the ground glass sample and to realize the full-light-field imaging, thus obtaining the surface morphology of the ground glass.

The object 30 is an object that transmits light, and in the present embodiment, the object 30 is ground glass.

In the present embodiment, the laser emitted by the laser device 10 has a wavelength of 532 nm.

In the present embodiment, the distance between the first focusing lens 20 and the object 30 is the focal length of the first focusing lens 20, and the focal length of the first focusing lens 20 may be 50mm.

In the present embodiment, the magnifying objective 40 is 10×, 0.1 NA.

In the present embodiment, the imaging assembly 1 in the full-light-field imaging camera 50 is an imaging lens, and the focal length of the imaging lens satisfies the following formula so as to match to the magnifying objective lens 40: focal length of the imaging lens = the equivalent focal length of the magnifying objective lens × magnification. In the present embodiment, the imaging assembly 1 has a focal length of 180 mm.

In the present embodiment, the Fourier transform lens 4 in the full-light-field imaging camera 50 may have a focal length of 100 mm.

In the present embodiment, each two-dimensional array detector in the full-light-field imaging camera 5 may be a 2048×2048 CMOS array detector with an image element size of 6.45 $\mu$m×6.45 $\mu$m. In another embodiment, the image element size may be any value less than or equal to 13.3 um to satisfy the sampling theorem's formula that is

$$\frac{2NA}{\lambda} < \frac{Mag}{2\Delta x}$$, wherein NA is the numerical aperture of the lens, $\lambda$ is the wavelength of the scattering light, Mag is the lens magnification, and $\Delta x$ is the sampling size, which must be larger than the image element size. And the sampling of the two-dimensional array detector needs to satisfy the sampling theorem in the frequency domain, that is, $\Delta x_f = \frac{\lambda f}{S}$,

wherein $\Delta x_f$ is the size of the sampling spacing, specifically the size of each pixel grid of the detector, $\lambda$ is the wavelength of the scattering light, f is the focal length of the lens, and S is the size of the image plane area.

In the present embodiment, the purpose for the amplification by using the magnifying objective lens 40 is that, based on the sampling theorem, the sampling frequency must be greater than two times of the highest frequency in the signal, so that the digital signal after sampling is able to retain the information in the original signal in perfect condition. Therefore, it is necessary to amplify light from the ground glass to make sampling more adequate, so that the phase information of the ground glass can be recovered better.

The full-light-field imaging device based on the full-light-field imaging camera of the present application has the advantages of no contact with the sample and simple realization of the light path compared to traditional methods of measuring the rough surface of the ground glass, such as contact probe detection and interferometric detection, etc. And compared to the existing Fourier ptychographic microscopy technique or coherent diffraction imaging technique, the present application does not need to get sufficient information to recover the phase by making the spatial Fourier spectrum information have overlapping portions or by oversampling, but rather to obtain sufficient information by means of dual plane images, thus reducing redundant information, being able to reduce the required data and reducing the difficulty of experimental operation.

Fourth embodiment: a full-light-field imaging device based on a full-light-field imaging camera

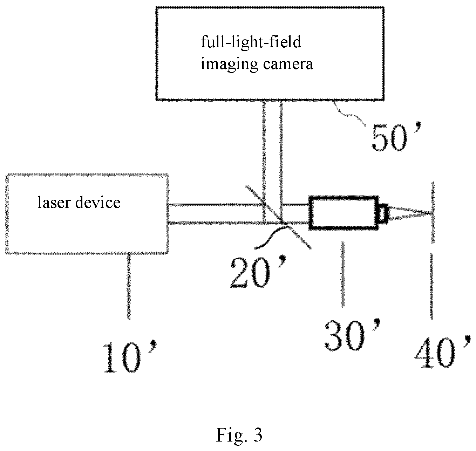

Fig. 3 shows a full-light-field imaging device based on a full-light-field imaging camera according to a fourth embodiment of the present application, which is applied to imaging in the field of microscopic imaging. As shown in Fig. 3, the full-light-field imaging device based on a full-light-field imaging camera comprises: a laser device 10', a beam splitter 20', an objective lens 30' and an object 40' located on the same light axis, and a full-light-field imaging camera 50' located in alignment with the beam splitter 20' and located on another light axis. In the present embodiment, the objective lens 30' constitutes 1 imaging objective lens in the imaging lens set, and the imaging lens set has only 1 imaging lens. The object 40' is located on the focal plane of the objective lens 30'.

As a result, the laser is focused onto the object 40' by means of the objective lens 30', and the scattered light generated by the sample is collected by the objective lens 30' and imaged by the full-light-field imaging camera 50' as described above, so as to obtain the amplitude and phase information of the sample, and realize the full-light-field imaging of the micro-object sample.

In the present embodiment, the laser device 10' emits a laser with a wavelength of 532 nm.

In the present embodiment, the objective lens 30' is $100\times$, 0.8 NA.

In the present embodiment, the imaging assembly 1 in the full-light-field imaging camera 50' is an imaging lens, and the focal length of the imaging lens satisfies the following formula so as to match to the magnifying objective lens 40: focal length of the imaging lens = the equivalent focal length of the magnifying objective lens $\times$ magnification. In the present embodiment, the imaging assembly 1 has a focal length of 180 mm.

In the present embodiment, the Fourier transform lens 4 in the full-light-field imaging camera 50' may have a focal length of 100 mm.

In the present embodiment, each two-dimensional array detector in the full-light-field imaging camera 5 may be a $2048\times2048$ CMOS array detector with an image element size of 6.45 $\mu$m$\times$6.45 $\mu$m. In another embodiment, the image element size may be any value less than or equal to 13.3 um to satisfy the sampling theorem's formula that is

$$\frac{2NA}{\lambda} < \frac{Mag}{2\Delta x}$$ , wherein NA is the numerical aperture of the lens, $\lambda$ is the wavelength of the scattering light, Mag is the lens magnification, and $\Delta$x is the sampling size, which must be larger than the image element size. And the sampling of the two-dimensional array detector needs to satisfy the sampling theorem in the frequency domain, that is, $\Delta x_f = \frac{\lambda f}{S}$,

wherein $\Delta x_f$ is the size of the sampling spacing, specifically the size of each pixel grid of the detector, $\lambda$ is the wavelength of the scattering light, f is the focal length of the lens, and S is the size of the image plane area.

In other embodiments, a full-light-field imaging device based on a full-light-field imaging camera may be a microscope, a camera, or a telescopic and remote sensing device, which comprises a full-light-field imaging camera as described above. The imaging assembly of the full-light-field imaging camera comprises an imaging lens assembly matched to the microscope objective lens, a camera lens assembly matched to the camera, or a telescopic and remote sensing imaging assembly matched to the telescopic and remote sensing device.

Compared to the existing Fourier ptychographic microscopy technique or coherent diffraction imaging technique, the microscopic imaging realized by the full-light-field imaging device based on the full-light-field imaging camera of the present application does not need to obtain sufficient information to recover the phase by making the spatial Fourier spectrum information have overlapping portions or by oversampling, but rather to obtain sufficient information by means of dual plane images, thus reducing redundant information, being able to reduce the required data and reducing the difficulty of experimental operation.

Only preferred embodiments of the present application are described above, and are not intended to limit the scope of the present application, and it is also possible to make various changes to the above embodiments of the present application. That is, all simple, equivalent changes and modifications made according to the claims and the description of the present application of application fall within the scope of protection of the claims of the present patent of application. The content not described in detail in the present application is conventional technical content.

**Claims**

**1.** A full-light-field imaging camera (50), comprising an imaging assembly (1) and a first two-dimensional array detector (3) which are sequentially arranged along a direction of a light path to form an intensity information acquisition system for image plane, an imaging assembly (1), a Fourier transform lens (4) and a second two-dimensional array detector (5) which are sequentially arranged along the direction of another light path to form an intensity information acquisition system for spatial Fourier spectrum, and an arithmetic processor (6) in communicational connection with the first two-dimensional array detector (3) and the second two-dimensional array detector (5); wherein the imaging assembly (1) is configured to receive scattering light from an object (30) to form an imaging light, the imaging light gives an image on a detection surface of the first two-dimensional array detector (3) to form a first image plane, and the imaging light gives an image at a position of a known distance in front of the Fourier transform lens (4) to form a second image plane, and then forms a spatial Fourier spectrum plane on a detection surface of the second two-dimensional array detector (5), where it is on a focal plane behind the Fourier transform lens (4), wherein the imaging light at the second image plane (8) forms a spatial Fourier spectrum plane after being transformed by the Fourier transform lens (4);

wherein the arithmetic processor (6) is configured to receive an intensity information in image plane and an intensity information in spatial Fourier spectrum plane, and perform the following step S1: using the intensity information in image plane and the intensity information in spatial Fourier spectrum plane as constraints for Iterative Fourier operation, obtaining spatial distribution information of amplitude and phase of the object (30) by using multiple Iterative Fourier operation, so as to realize full-light-field imaging, wherein the method of the Iterative Fourier operation comprises a Gerchberg-Saxton algorithm, or a Hybrid input-output algorithm or a Yang-Gu algorithm.

2. The full-light-field imaging camera (50) according to claim 1, wherein the number of the imaging assemblies (1) is one and a beam splitter (2) is provided between the imaging assembly (1) and the Fourier transform lens (4), or the number of the imaging assemblies (1) are two and a beam splitter (2) is provided in front of two imaging assemblies (1); and one of the first image plane (7) and the second image plane (8) is formed by first image of the imaging light, the other one is formed by second image of the imaging light after reflected by the beam splitter (2), and the first image plane (7) and the second image plane (8) are image planes representing a same information but located at different positions.

3. The full-light-field imaging camera (50) according to claim 1, wherein the first two-dimensional array detector (3) and the second two-dimensional array detector (5) are two different two-dimensional array detectors which respectively detect first intensity information in image plane and the intensity information in spatial Fourier spectrum plane at the same time, or are a same two-dimensional array detector which is movable along a light path; and the Fourier transform lens (4) is movable, so that movement of the two-dimensional array detector and movement of the Fourier transform lens (4) into and out of the light path lead to a switch between the intensity information acquisition system for image plane and the intensity information acquisition system for spatial Fourier spectrum.

4. The full-light-field imaging camera (50) according to claim 1, wherein the imaging light is imaged on a focal plane in front of the Fourier transform lens (4).

5. An imaging method of a full-light-field imaging camera (50), comprising:

Step S1': providing an imaging assembly (1) such that illumination light irradiates an object (30) and then passes through the imaging assembly (1) to form an imaging light of the object (30), placing a detection surface of a first two-dimensional array detector (3) on a first image plane (7) at where the imaging light forms first image, placing a Fourier transform lens (4) at a position at a known distance from a second image plane (8) at where the imaging light forms second image, and placing a second two-dimensional array detector (6) at a rear focal plane of the Fourier transform lens (4), wherein the imaging light at the second image plane (8) forms a spatial Fourier spectrum plane after being transformed by the Fourier transform lens (4); obtaining intensity information in image plane and intensity information in spatial Fourier spectrum plane of the object (30) by using the first two-dimensional array detector (3) and the second two-dimensional array detector (5);
Step S2': uploading the intensity information in image plane and the intensity information in spatial Fourier spectrum plane of the object (30) obtained in step S1' to an arithmetic processor (6), and utilizing said arithmetic processor (6) to perform step S1 as follows: using the intensity information in image plane and the intensity information in spatial Fourier spectrum plane as constraints for the Iterative Fourier operation, obtaining spatial distribution information of amplitude and phase of the object (30) by using multiple Iterative Fourier operation, so as to realize full-light-field imaging, wherein the method of the Iterative Fourier operation comprises a Gerchberg-Saxton algorithm, or a Hybrid input-output algorithm or a Yang-Gu algorithm.

6. The imaging method of A full-light-field imaging camera (50) according to claim 5, wherein the step S1' further comprises: the number of the imaging assemblies (1) is one, and a beam splitter (2) is placed between the imaging assembly (1) and the first two-dimensional array detector (3), or the number of the imaging assemblies (1) is two, and a beam splitter (2) is placed in front of two imaging assemblies (1); and a first image plane (7) is formed by first image of the imaging light, and a second image plane (8) is formed by second image of the imaging light after reflected by the beam splitter (2).

7. The imaging method of a full-light-field imaging camera (50) according to claim 5, wherein the illumination light is coherent light or partially coherent light of known coherence degree, the partially coherent light satisfying a quasi-monochromatic criterion.

8. A full-light-field imaging device based on a full-light-field imaging camera (50), comprising: a laser device, an object (30) and an imaging lens set on a same light axis, and a full-light-field imaging camera according to one of claims 1-4; wherein the imaging lens set is an imaging objective, or an imaging objective, and an imaging lens, and the object (30) is disposed in a focal plane of the imaging objective of the imaging lens set.

9. A full-light-field imaging device based on a full-light-field imaging camera (50), comprising a full-light-field imaging camera according to one of claims 1-4; wherein the full-light-field imaging device is a microscope, a camera, or a telescopic and remote sensing device, and an imaging assembly (1) of the full-light-field imaging camera comprises an imaging lens assembly matched to a microscopic objective lens, a camera lens assembly matched to the camera, or a telescopic and remote sensing imaging assembly (1) matched to the telescopic and remote sensing device.

**Patentansprüche**

1. Volllichtfeld-Abbildungskamera (50), umfassend eine Abbildungsanordnung (1) und einen ersten zweidimensionalen Array-Detektor (3), die entlang einer Richtung eines Lichtwegs sequenziell angeordnet sind, um ein Intensitätsinformations-Erfassungssystem für eine Bildebene zu bilden, eine Abbildungsanordnung (1), eine Fourier-Transformationslinse (4) und einen zweiten zweidimensionalen Array-Detektor (5), die entlang der Richtung eines anderen Lichtwegs sequenziell angeordnet sind, um ein Intensitätsinformations-Erfassungssystem für ein räumliches Fourier-Spektrum zu bilden, und einen arithmetischen Prozessor (6) in Kommunikationsverbindung mit dem ersten zweidimensionalen Array-Detektor (3) und dem zweiten zweidimensionalen Array-Detektor (5); wobei die Abbildungsanordnung (1) konfiguriert ist, um Streulicht von einem Objekt (30) zu empfangen, um ein Abbildungslicht zu bilden, das Abbildungslicht ein Bild auf einer Detektionsfläche des ersten zweidimensionalen Array-Detektors (3) gibt, um eine erste Bildebene zu bilden, und das Abbildungslicht ein Bild an einer Position eines bekannten Abstands vor der Fourier-Transformationslinse (4) gibt, um eine zweite Bildebene zu bilden, und dann eine räumliche Fourier-Spektrumebene auf einer Detektionsfläche des zweiten zweidimensionalen Array-Detektors (5) bildet, wo es sich auf einer Brennebene hinter der Fourier-Transformationslinse (4) befindet, wobei das Abbildungslicht an der zweiten Bildebene (8) eine räumliche Fourier-Spektrumebene bildet, nachdem es durch die Fourier-Transformationslinse (4) transformiert wurde;

wobei der arithmetische Prozessor (6) konfiguriert ist, um eine Intensitätsinformation in der Bildebene und eine Intensitätsinformation in der räumlichen Fourier-Spektrumebene zu empfangen und den folgenden Schritt S1 durchzuführen: Verwenden der Intensitätsinformation in der Bildebene und der Intensitätsinformation in der räumlichen Fourier-Spektrumebene als Einschränkungen für eine iterative Fourier-Operation, Erhalten von räumlicher Verteilungsinformation von Amplitude und Phase des Objekts (30) durch Verwenden einer mehrfachen iterativen Fourier-Operation, um eine Volllichtfeld-Abbildung zu realisieren, wobei das Verfahren der iterativen Fourier-Operation einen Gerchberg-Saxton-Algorithmus oder einen Hybrid-Eingabe-Ausgabe-Algorithmus oder einen Yang-Gu-Algorithmus umfasst.

2. Volllichtfeld-Abbildungskamera (50) nach Anspruch 1, wobei die Anzahl der Abbildungsanordnungen (1) eins ist und ein Strahlteiler (2) zwischen der Abbildungsanordnung (1) und der Fourier-Transformationslinse (4) bereitgestellt ist, oder die Anzahl der Abbildungsanordnungen (1) zwei ist und ein Strahlteiler (2) vor zwei Abbildungsanordnungen (1) bereitgestellt ist;

und eine von der ersten Bildebene (7) und der zweiten Bildebene (8) durch ein erstes Bild des Abbildungslichts gebildet wird, die andere durch ein zweites Bild des Abbildungslichts gebildet wird, nachdem es durch den Strahlteiler (2) reflektiert wurde, und die erste Bildebene (7) und die zweite Bildebene (8) Bildebenen sind, die eine gleiche Information darstellen, aber an verschiedenen Positionen angeordnet sind.

3. Volllichtfeld-Abbildungskamera (50) nach Anspruch 1, wobei der erste zweidimensionale Array-Detektor (3) und der zweite zweidimensionale Array-Detektor (5) zwei verschiedene zweidimensionale Array-Detektoren sind, die jeweils eine erste Intensitätsinformation in der Bildebene und die Intensitätsinformation in der räumlichen Fourier-Spektrumebene zur gleichen Zeit detektieren, oder ein gleicher zweidimensionaler Array-Detektor sind, der entlang eines Lichtwegs beweglich ist; und die Fourier-Transformationslinse (4) beweglich ist, so dass eine Bewegung des zweidimensionalen Array-Detektors und eine Bewegung der Fourier-Transformationslinse (4) in den und aus dem Lichtweg zu einem Wechsel zwischen dem Intensitätsinformationserfassungssystem für die Bildebene und dem Intensitätsinformationserfassungssystem für das räumliche Fourier-Spektrum führen.

**4.** Volllichtfeld-Abbildungskamera (50) nach Anspruch 1, wobei das Abbildungslicht auf einer Brennebene vor der Fourier-Transformationslinse (4) abgebildet wird.

**5.** Abbildungsverfahren einer Volllichtfeld-Abbildungskamera (50), umfassend:

Schritt S1': Bereitstellen einer Abbildungsanordnung (1), so dass Beleuchtungslicht ein Objekt (30) bestrahlt und dann durch die Abbildungsanordnung (1) geht, um ein Abbildungslicht des Objekts (30) zu bilden, Platzieren einer Detektionsfläche eines ersten zweidimensionalen Array-Detektors (3) auf einer ersten Bildebene (7), an der das Abbildungslicht ein erstes Bild bildet, Platzieren einer Fourier-Transformationslinse (4) an einer Position in einem bekannten Abstand von einer zweiten Bildebene (8), an der das Abbildungslicht ein zweites Bild bildet, und Platzieren eines zweiten zweidimensionalen Array-Detektors (6) an einer hinteren Brennebene der Fourier-Transformationslinse (4), wobei das Abbildungslicht an der zweiten Bildebene (8) eine räumliche Fourier-Spektrumebene bildet, nachdem es durch die Fourier-Transformationslinse (4) transformiert wurde; Erhalten einer Intensitätsinformation in der Bildebene und einer Intensitätsinformation in der räumlichen Fourier-Spektrumebene des Objekts (30) unter Verwendung des ersten zweidimensionalen Array-Detektors (3) und des zweiten zweidimensionalen Array-Detektors (5);

Schritt S2': Hochladen der Intensitätsinformation in der Bildebene und der Intensitätsinformation in der räumlichen Fourier-Spektrumebene des Objekts (30), die in Schritt S1' erhalten wurden, auf einen arithmetischen Prozessor (6) und Verwenden des arithmetischen Prozessors (6), um Schritt S1 wie folgt durchzuführen: Verwenden der Intensitätsinformation in der Bildebene und der Intensitätsinformation in der räumlichen Fourier-Spektrumebene als Einschränkungen für die iterative Fourier-Operation, Erhalten von räumlicher Verteilungsinformation von Amplitude und Phase des Objekts (30) durch Verwenden einer mehrfachen iterativen Fourier-Operation, um eine Volllichtfeld-Abbildung zu realisieren, wobei das Verfahren der iterativen Fourier-Operation einen Gerchberg-Saxton-Algorithmus oder einen Hybrid-Eingabe-Ausgabe-Algorithmus oder einen Yang-Gu-Algorithmus umfasst.

**6.** Abbildungsverfahren einer Volllichtfeld-Abbildungskamera (50) nach Anspruch 5, wobei der Schritt S1' ferner umfasst: die Anzahl der Abbildungsanordnungen (1) eins ist und ein Strahlteiler (2) zwischen der Abbildungsanordnung (1) und dem ersten zweidimensionalen Array-Detektor (3) platziert ist, oder die Anzahl der Abbildungsanordnungen (1) zwei ist und ein Strahlteiler (2) vor zwei Abbildungsanordnungen (1) platziert ist; und eine erste Bildebene (7) durch ein erstes Bild des Abbildungslichts gebildet wird und eine zweite Bildebene (8) durch ein zweites Bild des Abbildungslichts gebildet wird, nachdem es durch den Strahlteiler (2) reflektiert wurde.

**7.** Abbildungsverfahren einer Volllichtfeld-Abbildungskamera (50) nach Anspruch 5, wobei das Beleuchtungslicht kohärentes Licht oder teilweise kohärentes Licht mit bekanntem Kohärenzgrad ist, wobei das teilweise kohärente Licht ein quasi-monochromatisches Kriterium erfüllt.

**8.** Volllichtfeld-Abbildungsvorrichtung basierend auf einer Volllichtfeld-Abbildungskamera (50), umfassend: eine Laservorrichtung, ein Objekt (30) und eine Abbildungslinse, die auf einer gleichen Lichtachse angeordnet sind, und eine Volllichtfeld-Abbildungskamera nach einem der Ansprüche 1-4; wobei die Abbildungslinsenanordnung ein Abbildungsobjektiv oder ein Abbildungsobjektiv und eine Abbildungslinse ist und das Objekt (30) in einer Brennebene des Abbildungsobjektivs der Abbildungslinsenanordnung angeordnet ist.

**9.** Volllichtfeld-Abbildungsvorrichtung basierend auf einer Volllichtfeld-Abbildungskamera (50), umfassend eine Volllichtfeld-Abbildungskamera nach einem der Ansprüche 1-4;
wobei die Volllichtfeld-Abbildungsvorrichtung ein Mikroskop, eine Kamera oder eine Teleskop- und Fernerfassungsvorrichtung ist und eine Abbildungsanordnung (1) der Volllichtfeld-Abbildungskamera eine Abbildungslinsenanordnung, die auf eine mikroskopische Objektivlinse abgestimmt ist, eine Kameralinsenanordnung, die auf die Kamera abgestimmt ist, oder eine Teleskop- und Fernerfassungsabbildungsanordnung (1), die auf die Teleskop- und Fernerfassungsvorrichtung abgestimmt ist, umfasst.

**Revendications**

**1.** Caméra d'imagerie à champ de lumière total (50), comprenant un ensemble d'imagerie (1) et un premier détecteur de réseau bidimensionnel (3) qui sont agencés séquentiellement le long d'une direction d'un trajet de lumière pour former un système d'acquisition d'informations d'intensité pour un plan d'image, un ensemble d'imagerie (1), une lentille de transformée de Fourier (4) et un second détecteur de réseau bidimensionnel (5) qui sont agencés séquentiellement le long de la direction d'un autre trajet de lumière pour former un système d'acquisition d'informations d'intensité pour un spectre de Fourier spatial, et un processeur arithmétique (6) en connexion de communication avec le premier détecteur de réseau bidimensionnel (3) et le second détecteur de réseau bidimensionnel (5) ; dans laquelle l'ensemble d'imagerie (1) est configuré pour recevoir une lumière de diffusion en provenance d'un objet (30) pour former une lumière d'imagerie, la lumière d'imagerie donne une image sur une surface de détection du premier détecteur de réseau bidimensionnel (3) pour former un premier plan d'image, et la lumière d'imagerie donne une image à une position d'une distance connue devant la lentille de transformée de Fourier (4) pour former un second plan d'image, puis forme un plan de spectre de Fourier spatial sur une surface de détection du second détecteur de réseau bidimensionnel (5), où elle est sur un plan focal derrière la lentille de transformée de Fourier (4), dans laquelle la lumière d'imagerie au niveau du second plan d'image (8) forme un plan de spectre de Fourier spatial après avoir été transformée par la lentille de transformée de Fourier (4) ;

dans laquelle le processeur arithmétique (6) est configuré pour recevoir des informations d'intensité dans un plan d'image et des informations d'intensité dans un plan de spectre de Fourier spatial, et effectuer l'étape suivante S1 : utiliser les informations d'intensité dans un plan d'image et les informations d'intensité dans un plan de spectre de Fourier spatial en tant que contraintes pour une opération de Fourier itérative, obtenir des informations de distribution spatiale d'amplitude et de phase de l'objet (30) en utilisant une opération de Fourier itérative multiple, de manière à réaliser une imagerie à champ de lumière total, dans laquelle le procédé de l'opération de Fourier itérative comprend un algorithme de Gerchberg-Saxton, ou un algorithme d'entrée-sortie hybride ou un algorithme de Yang-Gu.

2. Caméra d'imagerie à champ de lumière total (50) selon la revendication 1, dans laquelle le nombre d'ensembles d'imagerie (1) est un et un séparateur de faisceau (2) est prévu entre l'ensemble d'imagerie (1) et la lentille de transformée de Fourier (4), ou le nombre d'ensembles d'imagerie (1) est deux et un séparateur de faisceau (2) est prévu devant deux ensembles d'imagerie (1) ;

et l'un du premier plan d'image (7) et du second plan d'image (8) est formé par une première image de la lumière d'imagerie, l'autre est formé par une seconde image de la lumière d'imagerie après avoir été réfléchie par le séparateur de faisceau (2), et le premier plan d'image (7) et le second plan d'image (8) sont des plans d'image représentant des mêmes informations mais situés à des positions différentes.

3. Caméra d'imagerie à champ de lumière total (50) selon la revendication 1, dans laquelle le premier détecteur de réseau bidimensionnel (3) et le second détecteur de réseau bidimensionnel (5) sont deux détecteurs de réseau bidimensionnel différents qui détectent respectivement des premières informations d'intensité dans un plan d'image et les informations d'intensité dans un plan de spectre de Fourier spatial en même temps, ou sont un même détecteur de réseau bidimensionnel qui est mobile le long d'un trajet de lumière ; et la lentille de transformée de Fourier (4) est mobile, de sorte qu'un mouvement du détecteur de réseau bidimensionnel et un mouvement de la lentille de transformée de Fourier (4) dans et hors du trajet de lumière conduisent à une commutation entre le système d'acquisition d'informations d'intensité pour un plan d'image et le système d'acquisition d'informations d'intensité pour un spectre de Fourier spatial.

4. Caméra d'imagerie à champ de lumière total (50) selon la revendication 1, dans laquelle la lumière d'imagerie est imagée sur un plan focal devant la lentille de transformée de Fourier (4).

5. Procédé d'imagerie d'une caméra d'imagerie à champ de lumière total (50), comprenant :

étape S1' : la fourniture d'un ensemble d'imagerie (1) de sorte qu'une lumière d'éclairage irradie un objet (30) puis passe à travers l'ensemble d'imagerie (1) pour former une lumière d'imagerie de l'objet (30), le placement d'une surface de détection d'un premier détecteur de réseau bidimensionnel (3) sur un premier plan d'image (7) au niveau duquel la lumière d'imagerie forme une première image, le placement d'une lentille de transformée de Fourier (4) à une position à une distance connue d'un second plan d'image (8) au niveau duquel la lumière d'imagerie forme une seconde image, et le placement d'un second détecteur de réseau bidimensionnel (6) au niveau d'un plan focal arrière de la lentille de transformée de Fourier (4), dans lequel la lumière d'imagerie au niveau du second plan d'image (8) forme un plan de spectre de Fourier spatial après avoir été transformée par la lentille de transformée de Fourier (4) ; l'obtention d'informations d'intensité dans un plan d'image et d'informations d'intensité dans un plan de spectre de Fourier spatial de l'objet (30) en utilisant le premier détecteur de réseau bidimensionnel (3) et le second détecteur de réseau bidimensionnel (5) ;

étape S2' : le téléchargement des informations d'intensité dans un plan d'image et des informations d'intensité dans un plan de spectre de Fourier spatial de l'objet (30) obtenues à l'étape S1' vers un processeur arithmétique (6), et l'utilisation dudit processeur arithmétique (6) pour effectuer l'étape S1 comme suit : l'utilisation des informations d'intensité dans un plan d'image et des informations d'intensité dans un plan de spectre de Fourier spatial en tant que contraintes pour l'opération de Fourier itérative, l'obtention d'informations de distribution spatiale d'amplitude et de phase de l'objet (30) en utilisant une opération de Fourier itérative multiple, de manière à réaliser une imagerie à champ de lumière total, dans lequel le procédé de l'opération de Fourier itérative comprend un algorithme de Gerchberg-Saxton, ou un algorithme d'entrée-sortie hybride ou un algorithme de Yang-Gu.

6. Procédé d'imagerie d'une caméra d'imagerie à champ de lumière total (50) selon la revendication 5, dans lequel l'étape S I' comprend en outre : le nombre d'ensembles d'imagerie (1) est un, et un séparateur de faisceau (2) est placé entre l'ensemble d'imagerie (1) et le premier détecteur de réseau bidimensionnel (3), ou le nombre d'ensembles d'imagerie (1) est deux, et un séparateur de faisceau (2) est placé devant deux ensembles d'imagerie (1) ; et un premier plan d'image (7) est formé par une première image de la lumière d'imagerie, et un second plan d'image (8) est formé par une seconde image de la lumière d'imagerie après avoir été réfléchie par le séparateur de faisceau (2).

7. Procédé d'imagerie d'une caméra d'imagerie à champ de lumière total (50) selon la revendication 5, dans lequel la lumière d'éclairage est une lumière cohérente ou une lumière partiellement cohérente d'un degré de cohérence connu, la lumière partiellement cohérente satisfaisant un critère quasi-monochromatique.

8. Dispositif d'imagerie à champ de lumière total basé sur une caméra d'imagerie à champ de lumière total (50), comprenant : un dispositif laser, un objet (30) et un ensemble de lentilles d'imagerie sur un même axe de lumière, et une caméra d'imagerie à champ de lumière total selon l'une des revendications 1 à 4 ; dans lequel l'ensemble de lentilles d'imagerie est un objectif d'imagerie, ou un objectif d'imagerie, et une lentille d'imagerie, et l'objet (30) est disposé dans un plan focal de l'objectif d'imagerie de l'ensemble de lentilles d'imagerie.

9. Dispositif d'imagerie à champ de lumière total basé sur une caméra d'imagerie à champ de lumière total (50), comprenant une caméra d'imagerie à champ de lumière total selon l'une des revendications 1 à 4 ;
dans lequel le dispositif d'imagerie à champ de lumière total est un microscope, une caméra, ou un dispositif de détection télescopique et à distance, et un ensemble d'imagerie (1) de la caméra d'imagerie à champ de lumière total comprend un ensemble de lentilles d'imagerie adapté à une lentille d'objectif microscopique, un ensemble de lentilles de caméra adapté à la caméra, ou un ensemble d'imagerie de détection télescopique et à distance (1) adapté au dispositif de détection télescopique et à distance.

Fig. 1

Fig. 2

full-light-field
imaging camera

50'

laser device

20'

10'

30'    40'

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHIEN-HUNG LU et al.** High-resolution light-field imaging via phase space retrieval. *APPLIED OPTICS*, 10 February 2019, vol. 58 (5), ISSN 1559-128X, A142
- **GERCHBERG R W, O. A S W**. A practical algorithm for the determination of phase from image and diffraction plane pictures[J].. *Optik*, 1972, vol. 35, 237-250
- **FIENUP J R**. Reconstruction of an object from modulus of its Fourier transform[J].. *Optics Letters*, 1978, vol. 3 (1), 27-29
- **YANG GUO-ZHEN** ; **GU BEN-YUAN**. on the amplitude-phase retrieval problem in optical systems. *Acta Phys. Sin.*, 1981, vol. 30 (3), 410-413